(19) Europäisches Patentamt
European Patent Office
Office européen des brevets

(11) Veröffentlichungsnummer: **0 488 932 B1**

(12) **EUROPÄISCHE PATENTSCHRIFT**

(45) Veröffentlichungstag der Patentschrift: **22.02.95**

(51) Int. Cl.[6]: **C08L 25/16**, C08L 51/04, C08L 69/00, C08L 57/00

(21) Anmeldenummer: **91710043.0**

(22) Anmeldetag: **18.11.91**

(54) **ABS-Formmassen.**

(30) Priorität: **29.11.90 DE 4038006**
**11.07.91 DE 4122871**

(43) Veröffentlichungstag der Anmeldung:
**03.06.92 Patentblatt 92/23**

(45) Bekanntmachung des Hinweises auf die Patenterteilung:
**22.02.95 Patentblatt 95/08**

(84) Benannte Vertragsstaaten:
**DE FR GB IT**

(56) Entgegenhaltungen:
**EP-A- 0 051 875**
**EP-A- 0 146 021**
**EP-A- 0 161 691**

(73) Patentinhaber: **BAYER AG**

**D-51368 Leverkusen (DE)**

(72) Erfinder: **Eichenauer, Herbert, Dr.**
**Gustav-Heinemann-Strasse 3**
**W-4047 Dormagen (DE)**
Erfinder: **Ott, Karl-Heinz, Dr.**
**Paul-Klee-Strasse 54**
**W-5090 Leverkusen (DE)**
Erfinder: **Pischtschan, Alfred, Dr.**
**Zur Eiche 33**
**W-5067 Kürten-Eichhof (DE)**

EP 0 488 932 B1

Anmerkung: Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

## Beschreibung

ABS-Polymerisate zeichnen sich durch ein ausgewogenes Eigenschaftsbild aus guter Zähigkeit, relativ hoher Härte, gutem Oberflächenglanz und guter Verarbeitbarkeit aus und werden daher schon seit Jahren in großen Mengen als thermoplastisches Harz für die Herstellung von Formteilen aller Art eingesetzt.

Mit zunehmendem Einsatz dieser Polymerisate steigen jedoch auch die Anforderungen an die ABS-Materialien, insbesondere dann, wenn daraus neuartige Teile hergestellt werden oder neue Anwendungsbereiche unter Einsatz dieser thermoplastischen Werkstoffe erschlossen werden sollen.

So werden für neuartige Anwendungen, z.B. im Automobilbereich oder im Gehäusesektor, Materialien benötigt, die eine Kombination aus hoher Zähigkeit, hoher Wärmeformbeständigkeit, möglichst gezielt einstellbarem Oberflächenglanz und sehr guter thermoplastischer Verarbeitbarkeit aufweisen.

ABS-Materialien, die jede der geforderten Eigenschaften für sich alleine erfüllen, sind bekannt.

Z.B. werden ABS-Polymerisate mit hoher Zähigkeit in der EP-A 116 330 beschrieben; allerdings sind hierbei nur hochglänzende Systeme mit geringen Wärmeformbeständigkeiten erhältlich.

ABS-Polymere mit matter Oberfläche sind z.B. in EP-A 139 271 beschrieben; die Herstellung dieser Polymerisate ist jedoch relativ kompliziert.

Die Herstellung von ABS-Thermoplasten mit verbesserter Wärmeformbeständigkeit durch Anwendung von $\alpha$-Methylstyrol als Monomerkomponente (vergl. EP-A 331 999 und dort zitierte Literatur) oder durch Einsatz spezieller anderer Monomerer (vergl. EP-A 212 123) ist bekannt; die hierbei resultierenden Formmassen weisen jedoch oft nur ungenügende Fließfähigkeiten auf.

Gegenstand der vorliegenden Erfindung sind thermoplastische Formmassen, enthaltend

A) 10 bis 80 Gew.-Teile, vorzugsweise 20 bis 70 Gew.-Teile, eines oder mehrerer thermoplastischer Co- oder Terpolymerisate, aufgebaut aus wenigstens einer polymerisierten Vinylmonomerkombination, ausgewählt aus Styrol, $\alpha$-Methylstyrol, Methylmethacrylat, Acrylnitril mit einem mittleren Molekulargewicht ($\overline{M}_w$) von 120.000 bis 200.000, vorzugsweise von 120.000 bis 150.000,

B) 10 bis 80 Gew.-Teile, vorzugsweise 20 bis 70 Gew.-Teile, eines oder mehrerer thermoplastischer Copolymerisate, aufgebaut aus 60 bis 95 Gew.-%, vorzugsweise 65 bis 85 Gew.-%, $\alpha$-Methylstyrol und 40 bis 5 Gew.-%, vorzugsweise 35 bis 15 Gew.-%, Acrylnitril mit einem mittleren Molekulargewicht ($\overline{M}_w$) von 50.000 bis 80.000, vorzugsweise von 60.000 bis 80.000,

C) 0,1 bis 20 Gew.-Teile, vorzugsweise 0,5 bis 10 Gew.-Teile, insbesondere 1 bis 5 Gew.-Teile, eines oder mehrerer thermoplastischer Co- oder Terpolymerisate, aufgebaut aus wenigstens einer polymerisierten Vinylmonomerenkombination, ausgewählt aus Styrol, $\alpha$-Methylstyrol, Methylmethacrylat, Acrylnitril mit einem mittleren Molekulargewicht ($\overline{M}_w$) von 1.500 bis 6.000, vorzugsweise von 2.000 bis 6.000,

D) 0,5 bis 40 Gew.-Teile, vorzugsweise 1 bis 30 Gew.-Teile, eines teilchenförmigen gepfropften Kautschuks mit einer Glastemperatur $\leqq 10\,°C$ und einem mittleren Teilchendurchmesser ($d_{50}$) von 0,05 bis 0,5 $\mu$m, vorzugsweise von 0,1 bis 0,4 $\mu$m, der pro 100 Gew.-Teile Kautschuk 30 bis 80 Gew.-Teile, vorzugsweise 35 bis 75 Gew.-Teile, eines Polymerisats aus Styrol, $\alpha$-Methylstyrol, Methylmethacrylat, Acrylnitril oder Mischungen daraus chemisch gebunden enthält, und

E) 0,5 bis 30 Gew.-Teile, vorzugsweise 1 bis 20 Gew.-Teile, eines teilchenförmigen gepfropften Kautschuks mit einer Glastemperatur $\leqq 10\,°C$ und einem mittleren Teilchendurchmesser ($d_{50}$) von 1 bis 5 $\mu$m, vorzugsweise von 1,2 bis 3 $\mu$m, der pro 100 Gew.-Teile Kautschuk, 100 bis 150 Gew.-Teile, vorzugsweise 110 bis 140 Gew.-Teile, eines Polymerisats aus Styrol, $\alpha$-Methylstyrol, Methylmethacrylat, Acrylnitril oder Mischungen daraus chemisch gebunden enthält,

F) und gegebenenfalls 20 bis 200 Gew.-Teile, vorzugsweise 25 bis 150 Gew.-Teile(jeweils bezogen auf 100 Gew.-Teile A + B + C + D + E) eines oder mehrerer aromatischer Polycarbonate.

Die thermoplastischen Formmassen gemäß vorliegender Erfindung zeichnen sich durch hohe Zähigkeit, hohe Wärmeformbeständigkeit, gezielt einstellbaren Oberflächenglanz und sehr gute thermoplastische Verarbeitbarkeit aus.

Die Herstellung der erfindungsgemäßen Formmassen erfolgt durch so langes Vermischen der Komponenten A, B, C, D, E, und gegebenenfalls F in der Schmelze, gegebenenfalls unter Zusatz üblicher Additive, bis ein homogener Zustand erreicht ist.

Ein bevorzugtes Verfahren zur Herstellung der Formmassen ist, zunächst die Komponenten B, C und D zu mischen und anschließend diese Mischung mit einer Mischung der Komponenten A,E und gegebenenfalls F zu vermischen.

Erfindungsgemäß geeignete thermoplastische Polymerisate gemäß Komponente A sind solche aus wenigstens einer Monomerenkombination, ausgewählt aus Styrol, $\alpha$-Methylstyrol, Methylmethacrylat, Acrylnitril. Besonders bevorzugte Polymerisate A sind solche aus Styrol/Acrylnitril-Gemischen und Styrol/$\alpha$-Methylstyrol/Acrylnitril-Gemischen.

Die Polymerisate gemäß Komponente A sind bekannt und lassen sich durch radikalische Polymerisation, insbesondere durch Emulsions-, Suspensions-, Lösungs- oder Massepolymerisation herstellen (z.B. gemäß DE-OS 26 19 969); sie können z.B. auch bei der in Emulsion, Suspension, Lösung oder Masse durchgeführten Pfropfpolymerisation in Form von nicht chemisch an die Pfropfgrundlage (im allgemeinen Kautschuk) gebundenen Polymeren entstehen. Sie müssen mittlere Molekulargewichte ($\overline{M}_w$) zwischen 120.000 und 200.000, vorzugsweise zwischen 120.000 und 150.000 aufweisen.

Erfindungsgemäß geeignete thermoplastische Polymerisate gemäß Komponente B sind solche aus 60 bis 95 Gew.-%, vorzugsweise 65 bis 85 Gew.-%, $\alpha$-Methylstyrol und 40 bis 5 Gew.-%, vorzugsweise 35 bis 15 Gew.-%, Acrylnitril.

Die Polymerisate gemäß Komponente B sind bekannt und können durch radikalische Polymerisation, insbesondere durch Emulsions-, Suspensions-, Lösungs- oder Massepolymerisation hergestellt werden (z.B. gemäß DE-OS 26 19 969). Sie müssen mittlere Molekulargewichte ($\overline{M}_w$) zwischen 50.000 und 80.000, vorzugsweise zwischen 60.000 und 80.000, aufweisen.

Erfindungsgemäß geeignete thermoplastische Polymerisate gemäß Komponente C sind solche aus wenigstens einer Monomerenkombination, ausgewählt aus Styrol, $\alpha$-Methylstyrol, Methylmethacrylat, Acrylnitril. Besonders bevorzugte Polymerisate C sind solche aus Styrol/Acrylnitril-Gemischen, $\alpha$-Methylstyrol/Acrylnitril-Gemischen, Styrol/$\alpha$-Methylstyrol/Acrylnitril-Gemischen.

Die Polymerisate gemäß Komponente C sind bekannt und lassen sich durch radikalische Polymerisation, insbesondere durch Emulsions-, Suspensions-, Lösungs- oder Massepolymerisation herstellen. Sie müssen mittlere Molekulargewichte ($\overline{M}_w$) zwischen 1.500 und 6.000, vorzugsweise zwischen 2.000 und 6.000 aufweisen.

Zur Herstellung des ersten gepfropften Kautschuks (Komponente D) geeignete Kautschuke mit einer Glastemperatur $\leqq$ 10 °C sind insbesondere Polybutadien, Butadien/Styrol-Copolymerisate, Butadien/Acrylnitril-Copolymerisate, Polyisopren oder Alkylacrylatkautschuke auf der Basis von $C_1$-$C_8$-Alkylacrylaten, insbesondere Ethyl-, Butyl-, Ethylhexylacrylat.

Die Alkylacrylatkautschuke können gegebenenfalls bis zu 30 Gew.-% (bezogen auf Kautschukgewicht) Monomere wie Vinylacetat, Acrylnitril, Styrol, Methylmethacrylat und/oder Vinylether copolymerisiert enthalten. Die Alkylacrylatkautschuke können weiterhin kleinere Mengen, vorzugsweise bis zu 5 Gew.-% (bezogen auf Kautschukgewicht) vernetzend wirkender ethylenisch ungesättigter Monomerer enthalten. Solche Vernetzer sind z.B. Alkylendiol-diacrylate und -methacrylate, Polyester-diacrylate und -methacrylate, Divinylbenzol, Trivinylbenzol, Triallylcyanurat, Allylacrylat und -methacrylat, Butadien oder Isopren.

Pfropfgrundlage können auch Acrylatkautschuke mit Kern/Mantel Struktur sein mit einem Kern aus vernetztem Dienkautschuk aus einem oder mehreren konjugierten Dienen, wie Polybutadien, oder einem Copolymerisat eines konjugierten Diens mit einem ethylenisch ungesättigten Monomer wie Styrol und/oder Acrylnitril.

Bevorzugter Kautschuk zur Herstellung der Pfropfkautschuke D ist Polybutadien.

Die Kautschuke liegen im Pfropfkautschuk D in Form wenigstens partiell vernetzter Teilchen einer mittleren Teilchengröße von 0,05 bis 0,5 $\mu$m, bevorzugt von 0,1 bis 0,4 $\mu$m vor.

Die Pfropfkautschuke D enthalten pro 100 Gew.-Teile Kautschuk 30 bis 80 Gew.-Teile, vorzugsweise 35 bis 75 Gew.-Teile, eines Polymerisats aus Styrol, $\alpha$-Methylstyrol, Methylmethacrylat, Acrylnitril oder Mischungen daraus chemisch gebunden.

Die Pfropfkautschuke D können durch radikalische Pfropfpolymerisation der oben angegebenen Monomeren(gemische) (Styrol, $\alpha$-Methylstyrol, Methylmethacrylat, Acrylnitril) in Gegenwart der zu bepfropfenden Kautschuke, vorzugsweise durch Emulsionspolymerisation, hergestellt werden. Besonders bevorzugte Pfropfkautschuke D sind die ABS-Polymerisate.

Zur Herstellung des gepfropften Kautschuks E geeignete Kautschuke mit einer Glastemperatur $\leqq$ 10 °C sind insbesondere Polybutadien, Butadien/Styrol-Copolymerisate, Butadien/Acrylnitril-Copolymerisate und Polyisopren. Bevorzugte Kautschuke zur Herstellung der Pfropfkautschuke E sind Polybutadien und Butadien/Styrol-Copolymerisate.

Die Kautschuke liegen im Pfropfkautschuk E in Form wenigstens partiell vernetzter Teilchen eines mittleren Teilchendurchmessers ($d_{50}$) von 1 bis 5 $\mu$m, vorzugsweise von 1,2 bis 3 $\mu$m, vor.

Die Pfropfkautschuke E enthalten pro 100 Gew.-Teile Kautschuk 100 bis 150 Gew.-Teile, vorzugsweise 110 bis 140 Gew.-Teile, eines Polymerisats aus Styrol, $\alpha$-Methylstyrol, Methylmethacrylat, Acrylnitril oder Mischungen daraus chemisch gebunden.

Die Pfropfkautschuke E können durch radikalische Pfropfpolymerisation der oben angegebenen Monomeren(gemische) (Styrol, $\alpha$-Methylstyrol, Methylmethacrylat, Acrylnitril) in Gegenwart der zu bepfropfenden Kautschuke, vorzugsweise durch Lösungs- oder Massepolymerisation, hergestellt werden. Besonders bevorzugte Pfropfkautschuke E sind die ABS-Polymerisate.

Geeignete Polycarbonate F können sowohl Homopolycarbonate als auch Copolycarbonate aus den Diphenolen der Formeln (I) und (II) sein

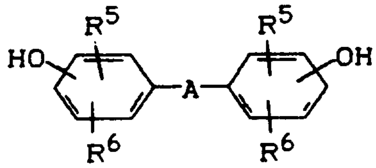

(I)

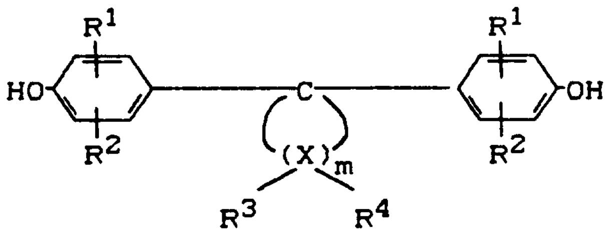

(II)

worin,

| | |
|---|---|
| A | eine Einfachbindung, $C_1$-$C_5$-Alkylen, $C_2$-$C_5$-Alkyliden, $C_5$-$C_6$-Cycloalkyliden, -O-, -S- oder -$SO_2$- ist, |
| $R^5$ und R6 | unabhängig voneinander für Methyl oder Halogen, insbesondere für Methyl, Chlor oder Brom stehen, |
| $R^1$ und $R^2$ | unabhängig voneinander Wasserstoff, Halogen, bevorzugt Chlor oder Brom, $C_1$-$C_8$-Alkyl, bevorzugt Methyl, Ethyl, $C_5$-$C_6$-Cycloalkyl, bevorzugt Cyclohexyl, $C_6$-$C_{10}$-Aryl, bevorzugt Phenyl, oder $C_7$-$C_{12}$-Aralkyl, bevorzugt Phenyl-$C_1$-$C_4$-alkyl, insbesondere Benzyl, bedeuten, |
| m | eine ganze Zahl von 4 bis 7, bevorzugt 4 oder 5, ist, |
| $R^3$ und $R^4$ | für jedes X individuell wählbar sind und unabhängig voneinander Wasserstoff oder $C_1$-$C_6$-Alkyl bedeuten und |
| X | Kohlenstoff bedeutet. |

Die Polycarbonate gemäß Komponente F können sowohl linear als auch verzweigt sein, sie können aromatisch gebundenes Halogen, vorzugsweise Brom und/oder Chlor enthalten, sie können aber auch frei von aromatisch gebundenem Halogen, also halogenfrei sein.

Die Polycarbonate F können sowohl einzeln als auch im Gemisch eingesetzt werden.

Die Diphenole der Formeln (I) und (II) sind entweder literaturbekannt oder nach literaturbekannten Verfahren herstellbar (siehe z.B. EP-A 0 359 953).

Die Herstellung der erfindungsgemäß geeigneten Polycarbonate gemäß Komponente F ist literaturbekannt und kann z.B. mit Phosgen nach dem Phasengrenzflächenverfahren oder mit Phosgen nach dem Verfahren in homogener Phase (dem sogenannten Pyridinverfahren) erfolgen, wobei das jeweils einzustellende Molekulargewicht in bekannter Weise durch eine entsprechende Menge an bekannten Kettenabbrechern erzielt wird.

Geeignete Kettenabbrecher sind z.B. Phenol oder p-tert.-Butylphenol, aber auch langkettige Alkylphenole wie 4-(1,3-Tetramethyl-butyl)phenol gemäß DE-OS 28 42 005 oder Monoalkylphenole oder Dialkylphenole mit insgesamt 8 bis 20 C-Atomen in den Alkylsubstituenten gemäß DE-OS 35 06 472, wie z.B. p-Nonylphenol, 2,5-di-tert.-Butylphenol, p-tert.-Octylphenol, p-Dodecylphenol, 2-(3,5-Dimethylheptyl)-phenol und 4-(3,5-Dimethylheptyl)-phenol. Die Menge an einzusetzenden Kettenabbrechern beträgt im allgemeinen zwischen 0,5 und 10 Mol-%, bezogen auf die Summe der jeweils eingesetzten Diphenole (I) und (II).

Die erfindungsgemäß geeigneten Polycarbonate gemäß Komponente F können in bekannter Weise verzweigt sein, und zwar vorzugsweise durch den Einbau von 0,05 bis 2,0 Mol-%, bezogen auf die Summe der eingesetzten Diphenole, an drei- oder mehr als dreifunktionellen Verbindungen, z.B. solchen mit drei oder mehr als drei phenolischen OH-Gruppen.

Sie haben mittlere Gewichtsmittelmolekulargewichte ($\overline{M}_w$ gemessen z.B. durch Ultrazentrifugation oder Streulichtmessung) von 10 000 bis 200 000, vorzugsweise von 20 000 bis 80 000.

Geeignete Diphenole der Formeln (I) und (II) sind z.B. Hydrochinon, Resorcin, 4,4'-Dihydroxydiphenyl, 2,2-Bis-(4-hydroxyphenyl)-propan, 2,4-Bis-(4-hydroxyphenyl)-2-methylbutan, 2,2-Bis-(4-hydroxy-3,5-dimethylphenyl)-propan, 2,2-Bis(4-hydroxy-3,5-dichlorphenyl)-propan, 2,2-Bis-(4-hydroxy-3,5-dibromphenyl)-propan, 1,1-Bis-(4-hydroxyphenyl)-cyclohexan, 1,1-Bis-(4-hydroxyphenyl)-3,3,5-trimethylcylohexan, 1,1-Bis-(4-hydroxyphenyl)-3,3-dimethylcylohexan, 1,1-Bis-(4-hydroxyphenyl)-3,3,5,5-tetramethylcyclohexan oder 1,1-Bis-(4-hydroxyphenyl) - 2,4,4-trimethylcyclopentan.

Bevorzugte Diphenole der Formel (I) sind 2,2-Bis-(4-hydroxyphenyl)propan und 1,1-Bis(4-hydroxyphenyl)-cyclohexan, bevorzugtes Phenol der Formel (II) ist 1,1-Bis-(4-hydroxyphenyl)-3,3,5-trimethylcyclohexan. Es können auch Mischungen von Diphenolen eingesetzt werden.

Die erfindungsgemäßen Mischungen, enthaltend die Komponenten A, B, C, D, E und gegebenenfalls F können gegebenenfalls bezogen auf die Summe des Gesamtgewichtes der Komponenten A, B, C, D, E und gegebenenfalls F bis zu 300 Gew.-Teile, vorzugsweise 0,1 bis 150 Gew.-Teile übliche Zusatzstoffe enthalten. Als übliche Zusatzstoffe kommen beispielsweise Gleitmittel, Stabilisatoren, Pigmente, Entformungsmittel, Antistatika, Füllstoffe (z.B. Glasfasern, Glaskugeln, Kieselgel) in Frage.

Die erfindungsgemäßen Mischungen, enthaltend A, B, C, D, E, gegebenenfalls F und gegebenenfalls übliche Zusatzstoffe werden hergestellt, indem man die jeweiligen Bestandteile in bekannter Weise simultan oder sukzessive bei Raumtemperatur oder bei höherer Temperatur vermischt und danach bei Temperaturen von 150 °C bis 300 °C in gebräuchlichen Aggregaten wie Innenknetern, Extrudern oder Doppelwellenschnecken schmelzcompoundiert oder schmelzextrudiert.

Ein bevorzugtes Verfahren zur Herstellung der Formmassen durch Vermischen spezieller Kombinationen von Einzelkomponenten ist oben beschrieben; durch dieses Verfahren gelingt die Erzeugung von Formmassen, die zu Formteilen mit besonders einheitlichen Oberflächen führen.

Die Formmassen der vorliegenden Erfindung können zur Herstellung von Formkörpern jeder Art verwendet werden, wobei übliche Herstellungsweisen benutzt werden können; insbesondere eignen sie sich zur Herstellung von solchen Teilen, bei denen eine Kombination aus hoher Zähigkeit, hoher Wärmeformbeständigkeit, sehr guter thermoplastischer Verarbeitbarkeit und gezielt einstellbarem geringem Oberflächenglanz gefordert wird wie z.B. Verkleidungen für den Kfz.-Innenraum oder Gehäuse für Radio- und Fernsehgeräte oder Computer.

Die Verarbeitung der Formmassen zu Formkörpern erfolgt vorzugsweise durch Spritzgießen oder durch Tiefziehen aus vorher nach bekannten Verfahren hergestellten Platten oder Folien.

Die oben angegebenen Teilchendurchmesser bedeuten immer mittlerer Teilchendurchmesser $d_{50}$, ermittelt durch Ultrazentrifugenmessungen nach W. Scholtan et al., Kolloid-Z. u.Z. Polymere 250 (1972), 782 bis 796 oder durch Ausmessung elektronenmikroskopischer Aufnahmen.

## Beispiele

### Thermoplastisches Harz - Komponente A1

Statistisches Styrol/Acrylnitril = 72 : 28 - Copolymerisat mit einem $\overline{M}_w$ von ca. 135.000, erhalten durch "Nebenherpolymerisation" von Styrol und Acrylnitril (nicht aufgepfropftes Styrol/Acrylnitril-Copolymer) bei der Herstellung eines Pfropfkautschukes durch radikalische Lösungspolymerisation.

### Thermoplastisches Harz - Komponente A2

Statistisches Styrol/Acrylnitril = 72 : 28 - Copolymerisat mit einem $\overline{M}_w$ von ca. 125.000, erhalten durch radikalische Emulsionspolymerisation.

### Thermoplastisches Harz - Komponente B

Statistisches α-Methylstyrol/Acrylnitril = 72 : 28 - Copolymerisat mit einem $\overline{M}_w$ von ca. 75.000, erhalten durch radikalische Emulsionspolymerisation.

### Thermoplastisches Harz - Komponente C1

Statistisches Styrol/Acrylnitril = 72 : 28 - Copolymerisat mit einem $\overline{M}_w$ von ca. 4.000, erhalten durch radikalische Emulsionspolymerisation.

Thermoplastisches Harz - Komponente C2

Statistisches α-Methylstyrol/Acrylnitril = 72 : 28 - Copolymerisat mit einem $\overline{M}_w$ von ca. 4.800, erhalten durch radikalische Emulsionspolymerisation.

Pfropfkautschuk - Komponente D

Pfropfkautschuk, erhalten durch radikalische Emulsionspolymerisation eines Styrol/Acrylnitril = 72 : 28 - Gemisches unter Verwendung eines teilchenförmigen Polybutadiens, wobei ein mittlerer Teilchendurchmesser ($d_{50}$) von ca. 0,33 µm resultiert und pro 100 Gew.-Teile Polybutadien 55 Gew.-Teile Styrol/Acrylnitril-Copolymerisat chemisch an das Polybutadien gebunden sind.

Pfropfkautschuk - Komponente E

Pfropfkautschuk, erhalten durch radikalische Lösungspolymerisation eines Styrol/Acrylnitril = 72 : 28 - Gemisches unter Verwendung eines Polybutadiens, wobei ein mittlerer Teilchendurchmesser ($d_{50}$) von ca. 1,2 µm resultiert und pro 100 Gew.-Teile Polybutadien 110 Gew.-Teile Styrol/Acrylnitril-Copolymerisat chemisch an das Polybutadien gebunden sind.

Die Compoundierung der Einsatzkomponenten erfolgte auf einem 4,5 l Innenkneter bei Temperaturen zwischen 160 °C und 220 °C. Die Herstellung der Formkörper erfolgte auf einer Spritzgießmaschine bei 240 °C.

Die Kerbschlagzähigkeit ($a_k$) wurde bei Raumtemperatur nach ISO 180/1A (Einheit kJ/$m^2$) ermittelt, die Bestimmung der Verarbeitbarkeit erfolgte durch Messung des Volumen-Fließindex MVI nach DIN 53 735 U (Einheit: $cm^3$/10 min) sowie des notwendigen Fülldruckes (siehe F. Johannaber, Kunststoffe 74 (1984), 1, Seiten 2 bis 5), die Wärmeformbeständigkeit wurde nach Vicat (Methode B) gemäß DIN 53 460 (Einheit: °C) gemessen. Die Glanzmessung erfolgte nach DIN 67 530 an einer ebenen Platte bei einem Reflektionswinkel von 60° (Reflektometerwert) mit Hilfe des Mehrwinkel-Reflektometers "Multi-Gloss" der Firma Byk-Mallinckrodt.

In Tabelle 1 sind die Zusammensetzungen der untersuchten Formmassen, in Tabelle 2 die erhaltenen Meßdaten zusammengestellt.

Gegenüber den Vergleichsversuchen weisen nur die erfindungsgemäßen thermoplastischen Formmassen eine Kombination aus guter Zähigkeit, guter Wärmeformbeständigkeit, guter Verarbeitbarkeit und einstellbarem Glanzgrad auf.

**Tabelle 1: Zusammensetzung der Formmassen**

| Beispiel | A1 Gew.-Teile | A2 Gew.-Teile | B Gew.-Teile | C1 Gew.-Teile | C2 Gew.-Teile | D Gew.-Teile | E Gew.-Teile |
|---|---|---|---|---|---|---|---|
| 1 | 54,5 | 1,5 | 22 | 2 | - | 5,5 | 14,5 |
| 2 | 47 | 2 | 29,5 | 2 | - | 7 | 12,5 |
| 3 | 32 | 3 | 45 | 1 | - | 10,5 | 8,5 |
| 4 | 7,5 | 5,5 | 65 | 2 | - | 18 | 2 |
| 5 | 39,5 | 2 | 39 | - | 2 | 7 | 10,5 |
| 6 | 7,5 | 15 | 45,5 | - | 3 | 27 | 2 |
| 7 (Vergleich) | 79 | - | - | - | - | - | 21 |
| 8 (Vergleich) | - | 76 | - | - | - | 24 | - |
| 9 (Vergleich) | 56 | - | 29 | - | - | - | 15 |
| 10 (Vergleich) | - | 11,5 | 60 | - | - | 28,5 | - |

**Tabelle 2: Meßdaten der Formmassen**

| Beispiel | $a_k$ ($kJ/m^2$) | Vicat B (°C) | Fülldruck (bar) | MVI ($cm^3$/10 min) | Glanzgrad |
|---|---|---|---|---|---|
| 1 | 19 | 105 | 181 | 5,9 | 62 |
| 2 | 18 | 106 | 178 | 5,5 | 58 |
| 3 | 16 | 110 | 186 | 5,0 | 67 |
| 4 | 20 | 113 | 172 | 7,7 | 82 |
| 5 | 23 | 109 | 169 | 8,1 | 70 |
| 6 | 25 | 111 | 171 | 7,7 | 78 |
| 7 (Vergleich) | 26 | 104 | 200 | 5,0 | 52 |
| 8 (Vergleich) | 22 | 103 | 195 | 7,3 | 83 |
| 9 (Vergleich) | 12 | 105 | 181 | 5,9 | 62 |
| 10 (Vergleich) | 30 | 106 | 219 | 3,3 | 84 |

## Patentansprüche

**1.** Thermoplastische Formmassen, enthaltend

A) 10 bis 80 Gew.-Teile eines oder mehrerer thermoplastischer Co-oder Terpolymerisate, aufgebaut aus wenigstens einer polymerisierten Vinylmonomerkombination, ausgewählt aus Styrol, α-Methylstyrol, Methylmethacrylat, Acrylnitril mit einem mittleren Molekulargewicht ($\overline{M}_w$) von 120.000 bis 200.000.

B) 10 bis 80 Gew.-Teile eines oder mehrerer thermoplastischer Copolymerisate, aufgebaut aus 60 bis 95 Gew.-% α-Methylstyrol und 40 bis 5 Gew.-% Acrylnitril mit einem mittleren Molekulargewicht ($\overline{M}_w$) von 50.000 bis 80.000.

C) 0,1 bis 20 Gew.-Teile eines oder mehrerer thermoplastischer Co- oder Terpolymerisate, aufgebaut aus wenigstens einer polymerisierten Vinylmonomerenkombination, ausgewählt aus Styrol, α-Methylstyrol, Methylmethacrylat, Acrylnitril mit einem mittleren Molekulargewicht ($\overline{M}_w$) von 1.500 bis 6.000,
D) 0,5 bis 40 Gew.-Teile eines teilchenförmigen gepfropften Kautschuks mit einer Glastemperatur ≦ 10 °C und einem mittleren Teilchendurchmesser ($d_{50}$) von 0,05 bis 0,5 µm, der pro 100 Gew.-Teile Kautschuk 30 bis 80 Gew.-Teile eines Polymerisats aus Styrol, α-Methylstyrol, Methylmethacrylat, Acrylnitril oder Mischungen daraus chemisch gebunden enthält, und
E) 0,5 bis 30 Gew.-Teile eines teilchenförmigen gepfropften Kautschuks mit einer Glastemperatur ≦ 10 °C und einem mittleren Teilchendurchmesser ($d_{50}$) von 1 bis 5 µm, der pro 100 Gew.-Teile Kautschuk, 100 bis 150 Gew.-Teile eines Polymerisats aus Styrol, α-Methylstyrol, Methylmethacrylat, Acrylnitril oder Mischungen daraus chemisch gebunden enthält,
F) und gegebenenfalls 20 bis 200 Gew.-Teile (bezogen auf 100 Gew.-Teile A + B + C + D + E) eines oder mehrere aromatischer Polycarbonate.

**2.** Thermoplastische Formmassen, enthaltend
A) 20 bis 70 Gew.-Teile eines oder mehrerer thermoplastischer Co- oder Terpolymerisate, aufgebaut aus wenigstens einer polymerisierten Vinylmonomerkombination, ausgewählt aus Styrol, α-Methylstyrol, Methylmethacrylat, Acrylnitril mit einem mittleren Molekulargewicht ($\overline{M}_w$) von 120.000 bis 150.000,
B) 20 bis 70 Gew.-Teile eines oder mehrerer thermoplastischer Copolymerisate, aufgebaut aus 65 bis 85 Gew.-% α-Methylstyrol und 35 bis 15 Gew.-% Acrylnitril mit einem mittleren Molekulargewicht ($\overline{M}_w$) von 60.000 bis 80.000,
C) 0,5 bis 10 Gew.-Teile eines oder mehrerer thermoplastischer Co- oder Terpolymerisate, aufgebaut aus wenigstens einer polymerisierten Vinylmonomerenkombination, ausgewählt aus Styrol, α-Methylstyrol, Methylmethacrylat, Acrylnitril mit einem mittleren Molekulargewicht ($\overline{M}_w$) von 2.000 bis 6.000,
D) 1 bis 30 Gew.-Teile eines teilchenförmigen gepfropften Kautschuks mit einer Glastemperatur ≦ 10 °C und einem mittleren Teilchendurchmesser ($d_{50}$) von 0,1 bis 0,4 µm, der pro 100 Gew.-Teile Kautschuk 35 bis 75 Gew.-Teile eines Polymerisats aus Styrol, α-Methylstyrol, Methylmethacrylat, Acrylnitril oder Mischungen daraus chemisch gebunden enthält, und
E) 1 bis 20 Gew.-Teilen eines teilchenförmigen gepfropften Kautschuks mit einer Glastemperatur ≦ 10 °C und einem mittleren Teilchendurchmesser ($d_{50}$) von 1,2 bis 3 µm, der pro 100 Gew.-Teile Kautschuk 110 bis 140 Gew.-Teile eines Polymerisats aus Styrol, α-Methylstyrol, Methylmethacrylat, Acrylnitril oder Mischungen daraus chemisch gebunden enthält,
F) und gegebenenfalls 25 bis 150 Gew.-Teile (bezogen auf 100 Gew.-Teile A + B + C + D + E) eines oder mehrerer aromatischer Polycarbonate.

**3.** Verfahren zur Herstellung von thermoplastischen Formmassen gemäß den Ansprüchen 1 und 2, dadurch gekennzeichnet, daß zunächst die Komponenten B, C und D gemischt werden, und anschließend die resultierende Mischung mit einer Mischung der Komponenten A, E und gegebenenfalls F vermischt wird.

**4.** Verwendung der Formmassen gemäß Anspruch 1 zur Herstellung von Formkörpern.

## Claims

**1.** Thermoplastic moulding compounds containing
A) 10 to 80 parts by weight of one or more thermoplastic copolymers or terpolymers synthesized from at least one polymerized vinyl monomer combination selected from styrene, α-methyl styrene, methyl methacrylate, acrylonitrile having an average molecular weight ($\overline{M}_w$) in the range from 120,000 to 200,000,
B) 10 to 80 parts by weight of one or more thermoplastic copolymers synthesized from 60 to 95% by weight α-methyl styrene and 40 to 5% by weight acrylonitrile having an average molecular weight ($\overline{M}_w$) in the range from 50,000 to 80,000,
C) 0.1 to 20 parts by weight of one or more thermoplastic copolymers or terpolymers synthesized from at least one polymerized vinyl monomer combination selected from styrene, α-methyl styrene, methyl methacrylate, acrylonitrile having an average molecular weight ($\overline{M}_w$) in the range from 1,500

to 6,000,

D) 0.5 to 40 parts by weight of a particulate grafted rubber having a glass temperature of ≦ 10 °C and an average particle diameter ($d_{50}$) of 0.05 to 0.5 µm which contains per 100 parts by weight rubber from 30 to 80 parts by weight of a polymer of styrene, α-methyl styrene, methyl methacrylate, acrylonitrile or mixtures thereof in chemically bound form and

E) 0.5 to 30 parts by weight of a particulate grafted rubber having a glass temperature of ≦ 10 °C and an average particle diameter ($d_{50}$) of 1 to 5 µm which contains per 100 parts by weight rubber from 100 to 150 parts by weight of a polymer of styrene, α-methyl styrene, methyl methacrylate, acrylonitrile or mixtures thereof in chemically bound form and optionally

F) 20 to 200 parts by weight (based on 100 parts by weight of A + B + C + D + E) of one or more aromatic polycarbonates.

**2.** Thermoplastic moulding compounds containing

A) 20 to 70 parts by weight of one or more thermoplastic copolymers or terpolymers synthesized from at least one polymerized vinyl monomer combination selected from styrene, α-methyl styrene, methyl methacrylate, acrylonitrile having an average molecular weight ($\overline{M}_w$) in the range from 120,000 to 150,000,

B) 20 to 70 parts by weight of one or more thermoplastic copolymers synthesized from 65 to 85% by weight α-methyl styrene and 35 to 15% by weight acrylonitrile having an average molecular weight ($\overline{M}_w$) in the range from 60,000 to 80,000,

C) 0.5 to 10 parts by weight of one or more thermoplastic copolymers or terpolymers synthesized from at least one polymerized vinyl monomer combination selected from styrene, α-methyl styrene, methyl methacrylate, acrylonitrile having an average molecular weight ($\overline{M}_w$) in the range from 2,000 to 6,000,

D) 1 to 30 parts by weight of a particulate grafted rubber having a glass temperature of ≦ 10 °C and an average particle diameter ($d_{50}$) of 0.1 to 0.4 µm which contains per 100 parts by weight rubber from 35 to 75 parts by weight of a polymer of styrene, α-methyl styrene, methyl methacrylate, acrylonitrile or mixtures thereof in chemically bound form and

E) 1 to 20 parts by weight of a particulate grafted rubber having a glass temperature of ≦ 10 °C and an average particle diameter ($d_{50}$) of 1.2 to 3 µm which contains per 100 parts by weight rubber from 110 to 140 parts by weight of a polymer of styrene, α-methyl styrene, methyl methacrylate, acrylonitrile or mixtures thereof in chemically bound form and optionally

F) 25 to 150 parts by weight (based on 100 parts by weight of A + B + C + D + E) of one or more aromatic polycarbonates.

**3.** A process for the production of the thermoplastic moulding compounds claimed in claims 1 and 2, characterized in that components B, C and D are mixed and the resulting mixture is subsequently mixed with a mixture of components A, E and optionally F.

**4.** The use of the moulding compounds claimed in claim 1 for the production of mouldings.

## Revendications

**1.** Masses à mouler thermoplastique comprenant :

A) 10 à 80 parties en poids d'un ou plusieurs co- ou terpolymères thermoplastiques, constitués au moins d'une combinaison de monomerès vinyliques polymérisée, choisie parmi le styrène, l'α-méthylstyrène, le méthacrylate de méthyle, l'acrylonitrile d'un poids moléculaire moyen ($\overline{M}_w$) de 120 000 à 200 000,

B) 10 à 80 parties en poids, d'un ou plusieurs copolymères thermoplastiques constitués de 60 à 95 % en poids, d'α-méthylstyrène et 40 à 5 % en poids, d'acrylonitrile avec un poids moléculaire moyen ($\overline{M}_w$) de 50 000 à 80 000,

C) 0,1 à 20 parties en poids, d'un ou plusieurs co- ou terpolymères thermoplastiques constitués à partir d'au moins une combinaison de monomères vinyliques polymérisée, choisie parmi le styrène, l'α-méthylstyrène, le méthacrylate de méthyle, l'acrylonitrile avec un poids moléculaire moyen ($\overline{M}_w$) de 1 500 à 6 000,

D) 0,5 à 40 parties en poids, d'un caoutchouc greffé sous forme de particules ayant une température de transition vitreuse ≦ 10 °C et une taille moyenne de particules ($d_{50}$) de 0,05 à 0,5 µm, qui contient pour 100 parties en poids de caoutchouc 30 à 80 parties en poids d'un polymère de

styrène, α-méthylstyrène, méthacrylate de méthyle, acrylonitrile ou leurs mélanges liés chimiquement, et

E) 0,5 à 30 parties en poids d'un caoutchouc greffé sous forme de particules ayant une température de transition vitreuse ≦ 10 °C et une taille moyenne de particules ($d_{50}$) de 1 à 5 µm, qui contient pour 100 parties en poids de caoutchouc, 100 à 150 parties en poids d'un polymère de styrène, α-méthylstyrène, méthacrylate de méthyle, acrylonitrile ou leurs mélanges chimiquement liés, et

F) le cas échéant 20 à 200 parties en poids (rapportées à 100 parties en poids de A + B + C + D + E) d'un ou plusieurs polycarbonates aromatiques.

**2.** Masse à mouler thermoplastique, contenant

A) 20 à 70 parties en poids d'un ou plusieurs co- ou terpolymères thermoplastiques, constitués d'au moins d'une combinaison de monomères vinyliques polymérisée, choisie parmi le styrène, l'α-méthylstyrène, le méthacrylate de méthyle, l'acrylonitrile avec un poids moléculaire moyen ($\overline{M}_w$) de 120 000 à 150 000,

B) 20 à 70 parties en poids, d'un ou plusieurs copolymères thermoplastiques, constitués de 65 à 85 % en poids d'α-méthylstyrène et de 35 à 15 % en poids d'acrylonitrile avec un poids moléculaire moyen ($\overline{M}_w$) de 60 000 à 80 000,

C) 0,5 à 10 parties en poids d'un ou plusieurs co- ou terpolymères thermoplastiques constitués d'au moins une combinaison de monomères vinyliques polymérisée, choisie parmi le styrène, l'α-méthylstyrène, le méthacrylate de méthyle, l'acrylonitrile avec un poids moléculaire moyen ($\overline{M}_w$) de 2 000 à 6 000,

D) 1 à 30 parties en poids d'un caoutchouc greffé en forme de particules ayant une température de transition vitreuse ≦ 10 °C et un diamètre moyen de particules ($d_{50}$) de 0,1 à 0,4 µm, qui contient pour 100 parties en poids de caoutchouc 35 à 75 parties en poids d'un polymère de styrène, α-méthylstyrène, méthacrylate de méthyle, acrylonitrile ou leurs mélanges qui sont liés chimiquement, et

E) 1 à 20 parties en poids d'un caoutchouc greffé sous forme de particules ayant une température de transition vitreuse ≦ 10 °C et une taille moyenne de particules ($d_{50}$) de 1,2 à 3 µm, qui contient pour 100 parties en poids de caoutchouc, 110 à 140 parties en poids d'un polymère de styrène, α-méthylstyrène, méthacrylate de méthyle, acrylonitrile ou leurs mélanges chimiquement liés, et

F) le cas échéant 25 à 150 parties en poids, (rapportées à 100 parties en poids de A + B + C + D + E) d'un ou plusieurs polycarbonates aromatiques.

**3.** Procédé de préparation de masses à mouler thermoplastiques selon les revendications 1 et 2, caractérisé en ce qu'on mélange d'abord les composants B, C et D et qu'ensuite on mélange le mélange résultant à un mélange des composants A et E et le cas échéant F.

**4.** Utilisation des masses à mouler selon la revendication 1 pour produire des corps moulés.